# EUROPEAN PATENT SPECIFICATION

(11) **EP 3 281 929 B1**
(45) Date of publication and mention of the grant of the patent: **26.08.2020**
(21) Application number: 17167349.4
(22) Date of filing: 20.04.2017
(51) Int. Cl.: C04B 41/85, C04B 41/00, C04B 41/50

(54) **PROTECTIVE COATING COMPOSITION FOR MOLTEN ALUMINIUM AND ALKALI METAL ENVIRONMENTS**
SCHUTZBESCHICHTUNGSZUSAMMENSETZUNG FÜR GESCHMOLZENES ALUMINIUM UND ALKALIMETALLUMGEBUNGEN
COMPOSITION DE REVÊTEMENT PROTECTEUR POUR DES ENVIRONNEMENTS D'ALUMINIUM FONDU ET DE MÉTAL ALCALIN

(30) Priority: 12.08.2016 US 201615235740; 12.08.2016 US 201615235774; 22.02.2017 US 201715439868; 22.02.2017 US 201715439885
(43) Date of publication of application: 14.02.2018
(73) Proprietor: MAGNECO/METREL, INC., Addison, Illinois 60101 (US)
(72) Inventor: Soofi, Madjid, Elgin, IL Illinois 60124 (US); Binz, Lara, Volo, IL Illinois 60020 (US); Anderson, Michael W., West Chicago, IL Illinois 60185 (US)
(74) Representative: HGF

(56) References cited:
- EP-A2- 0 165 754
- WO-A1-2015/173620
- DE-A1- 4 141 186
- DE-A1-102008 003 640
- GB-A- 2 147 893
- US-A1- 2002 158 373

## Description

### FIELD OF THE INVENTION

This invention is directed to a refractory composition that can be easily applied to molten metal containment vessels by brushing, rolling, spraying or the like. The composition protects the vessel walls against corrosion and other degradation caused by exposure to molten aluminum and alkali metals and vapors contained in the vessel.

### BACKGROUND OF THE INVENTION

Molten aluminum and molten alkali metals and vapors are known to attack refractory walls and linings made of alumina, silica, magnesia, magnesite, chromite, and other materials. Prolonged exposure to these molten metals and vapors promotes corrosion and degradation of various parts of furnaces and other containment vessels, including walls, ceilings, roofs, exhaust ducts, floors, ramps, skim shelves, spouts, tap holes, troughs, runners, launders, lentils, door jams, and doors. In the past, this required periodic replacement of the refractory linings and/or the containment vessels. This periodic replacement often entailed significant down time and expense.

Only a small amount of corrosion and degradation is required to adversely affect the thermal insulation properties of the refractory wall or lining. When the refractory wall or lining is formed of alumina-silicate, as is commonly the case, the molten aluminum chemically reacts with the refractory to form corundum, which is a mixture of Al₂O₃ with unreacted Si and Al. This reaction product strongly attaches itself to the refractory by filling its porosity, and is very difficult to remove.

By way of example, molten aluminum reacts with silica in the refractory wall or lining as follows:

4Al + 3SiO₂ → 2Al₂O₃ + 3Si

If the molten aluminum is a metal-bearing alloy, such as an aluminum-magnesium alloy, the following additional reactions may occur:

2Mg + SiO₂ → 2MgO + Si

3Mg + 4Al₂O₃ → 3MgAl₂O₄+2Al

Other oxides frequently found in refractories are also reduced by reaction with molten aluminum and alkali metals and vapor. These include oxides of titanium and iron, for example. There is a need or desire for an easy-to-apply coating that protects refractory walls and linings from chemical attack by molten aluminum and alkali metals and vapors. In EP0165754A2 a coating composition comprising aluminosilicate, alumina, silica, kaolin and barium sulphate is disclosed.

### SUMMARY OF THE INVENTION

The present invention is directed to an aqueous coating composition that can be easily applied to any ceramic or masonry surface by brushing, rolling, spraying or the like, and subsequently dried. The invention is also directed to the dried coating composition. The dried coating composition protects the ceramic or masonry surface from chemical attack from molten aluminum and/or alkali metals and vapors.

The dried protective coating composition includes the following ingredients:
20% or more by weight Al₂O₃;
15% to 55% by weight SiO₂; and
1% to 15% by weight of a metallic non-wetting agent;
wherein the Al₂O₃, SiO₂, and non-wetting agent together constitute at least about 90% by weight of the protective coating composition.

The aqueous coating composition includes about 5% to about 40% by weight water and about 60% to about 95% by weight solids. The solids include, on a dry weight basis:
20% or more by weight Al₂O₃;
15% to 55% by weight SiO₂; and
1% to 15% by weight of a metallic non-wetting agent;
wherein the Al₂O₃, SiO₂, and non-wetting agent together constitute at least about 90% by weight of the solids.

Some of the Al₂O₃ and SiO₂ are suitably in the form of mullite, having the chemical formula 3Al₂O₃•2SiO₂. Said mullite constituting 30% to 70% by weight of the protective coating composition. Some of the silica is suitably added with the water in the form of colloidal silica. Some of the alumina can be in the form of calcined alumina. The non-wetting agent is believed to combine with the Al₂O₃ and SiO₂ to form a combination which resists penetration and reaction with molten aluminum and alkali metals and vapors, thereby providing the protective coating.

With the foregoing in mind, it is a feature and advantage of the invention to provide a protective coating composition for molten aluminum and alkali metal environments that can be easily applied and re-applied to a ceramic or masonry surface by brushing, spraying, rolling or similar techniques.

It is also a feature and advantage of the invention to provide an environmentally safe protective coating composition that is substantially free of organic components.

It is also a feature and advantage of the invention to provide a protective coating composition for molten aluminum and alkali metal environments, that is relatively inexpensive to formulate, purchase and use.

These and other features and advantages of the invention will become further apparent from the following detailed description of the invention.

### DETAILED DESCRIPTION OF THE INVENTION

The invention is directed to an aqueous protective coating composition that can be easily applied to a concrete or masonry surface by brushing, spraying, rolling or the like and subsequently dried. The invention is also directed to the dried protective coating composition that provides effective protection in molten aluminum and alkali metal environments.

The dried protective coating composition comprises 20% or more by weight Al₂O₃. Suitably, the dried protective coating composition includes about 30% to about 70% by weight Al₂O₃, or about 40% to about 60% by weight Al₂O₃. The dried protective coating composition comprises 15% to 55% by weight SiO₂, suitably about 25% to about 50% by weight SiO₂, or about 30% to about 45% by weight SiO₂.

Some or all of the Al₂O₃ and some of the SiO₂ are provided as mullite having the chemical formula 3Al₂SO₃•2SiO₂. The mullite can be micronized to a median particle diameter of about 1-100 microns, suitably about 2-10 microns. One suitable commercially available mullite is MJ5M micronized mullite, available from the Kyanite Mining Corporation in Dillwyn, Virginia. MJ5M micronized mullite has a median particle diameter of about 5 to about 9 microns and contains about 55-60% by weight Al₂O₃, about 38-43% by weight SiO₂, less than about 1% by weight Fe₂O₃, about 1-2% by weight TiO₂, and less than about 1% by weight alkali and alkaline earth metal oxides (e.g., CaO, MgO, Na₂O, K₂O). The mullite may constitute about 30% to about 70% by weight of the dried protective coating composition, suitably about 40% to about 60% by weight. The micronized mullite primarily benefits the stability of the wet mixture, helping to keep the components in suspension instead of settling out.

As an alternative to MJ5M micronized mullite, it has been found advantageous to use a mixture of micronized mullites having smaller and larger particle sizes. The micronized mullite mixture has the advantage of being able to reduce the porosity of the dried protective coating composition by filling pores and voids that would otherwise be left open. In one embodiment, 325-mesh micronized mullite (325M) having a larger median particle diameter of about 10-15 microns can be mixed with MJ5M micronized mullite having a smaller median particle diameter of about 5-9 microns. One suitable micronized mullite mixture contains about 10 to about 50% by weight of the smaller micronized mullite and about 50 to about 90% by weight of the larger micronized mullite, or about 20 to about 30% by weight of the smaller micronized mullite and about 70 to about 80% by weight of the larger micronized mullite.

In one embodiment, micronized mullite having the following particle size distributions can be comined in any of the above weight ratios, or a weight ratio of about 25% smaller micronized mullite and about 75% larger micronized mullite.

### Smaller Micronized Mullite (MJ5M)

| | |
|---|---|
| d10 | 1.28 microns |
| d50 | 6.83 microns |
| d90 | 21.72 microns |

### Larger Micronized Mullite (325M)

| | |
|---|---|
| d10 | 1.58 microns |
| d50 | 11.43 microns |
| d90 | 43.87 microns |

In the above example, the designation "d50" means that 50% of the smaller micronized mullite had a diameter of 6.83 microns or less, and 50% of the larger micronized mullite particles had a diameter of 11.43 microns or less. The designators "d10" and "d90" have corresponding percentage-based meanings. This combination of smaller and larger micronized mullite particles has been shown to provide some reduction in porosity compared to using either the smaller or the larger micronized mullite alone.

Some of the Al₂O₃ can be calcined alumina, suitably having a median particle size of about 1 to about 50 microns, or about 2 to about 25 microns, or about 3 to about 10 microns. When calcined alumina is present, the dried protective coating composition may include about 5% to about 40% by weight calcined alumina, or about 15% to about 35% by weight calcined alumina, or about 20% to about 30% by weight calcined alumina. One suitable calcined alumina is sold under the name AC2-325M, available from AluChem, Inc. of Reading, Ohio. Calcined alumina can be purchased or made by calcining aluminum powder at 1200-1300°C to convert it to pure Al₂O₃.

Some of the SiO₂ can be colloidal silica having a median particle diameter of about 1-100 nanometers, suitably about 4-100 nanometers, or about 6-50 nanometers, or about 8-20 nanometers. The colloidal silica is provided in an aqueous colloidal suspension that includes about 30-60% by weight colloidal silica particles and about 40-70% by weight water, suitably about 40% by weight colloidal silica particles and about 60% by weight water. When the protective coating composition is dried, the colloidal silica particles act as a binder between the remaining ingredients and to the substrate. The colloidal silica particles may constitute about 5% to about 30% by weight of the dried protective coating composition, suitably about 10% to about 25% by weight.

In one embodiment, the particle sizes of the colloidal silica can be optimized in order to reduce the porosity of the protective coating composition by filling pores and voids that would otherwise be left open. Smaller colloidal silica particles having a median particle diameter of 1 to less than 50 nanometers, or about 5 to about 20 nanometers, can be combined with larger colloidal silica particles having a median particle diameter of about 50 to about 100 nanometers, or about 60 to about 80 nanometers. Suitable weight ranges are from about 10 to about 90% smaller colloidal silica particles and about 10 to about 90% by weight larger colloidal silica particles, or about 20 to about 80% by weight smaller colloidal silica particles and about 20 to about 80% by weight larger colloidal silica particles.

The dried protective coating composition includes 1% to 15% by weight of a metallic non-wetting agent, suitably about 3% to about 13% by weight, or about 5% to about 12% by weight. The metallic non-wetting agent is non-wetting as to molten aluminum and alkali metals and vapors, and resists wetting by these metals. It is believed that the metallic non-wetting agent combines with the alumina and/or silica in the protective coating composition to provide the overall composition with non-wetting properties and substantial chemical inertness to molten aluminum (including aluminum-based alloys) and alkali metals and vapors.

A wide variety of metallic non-wetting agents can be employed in the protective coating composition. Examples of metallic non-wetting agents include metal phosphates such as lanthanum phosphate, trisodium phosphate, tetrasodium phosphate, sodium pyrophosphate, magnesium phosphate, potassium phosphate, barium phosphate, iron (III) phosphate, copper (III) phosphate, iron (II) phosphate, calcium phosphate, nickel (II) phosphate, strontium phosphate, aluminum phosphate, aluminum hydrogen phosphate, aluminum dihydrogen phosphate, aluminum pyrophosphate, aluminum perphosphate, aluminum metaphosphate, and combinations thereof. When heated to temperatures above 980°C to temperatures characteristic of an aluminum melting furnace, these phosphates can combine with the alumina to form an aluminum orthophosphate bond, providing the protective coating composition with a high degree of resistance to molten metal attack.

Other examples of metallic non-wetting agents include zirconium silicates such as zirconium metasilicate (Zr (SiO₃)₂) and zirconium orthosilicate (ZrSiO₄); Group II metal sulfates such as barium sulfate, strontium sulfate, calcium sulfate and magnesium sulfate; and combinations thereof. These compounds may decompose at high temperatures to form oxides which in turn, react with alumina to form stable oxides phases. For example, barium sulfate decomposes into barium oxide (BaO) at high temperatures, which in turn combines with the alumina to form barium hexaluminate (BaO•6Al₂O₃) or the monaluminate spinel (BaO•Al₂O₃), both of which are stable and resistant to molten metal attack.

Other examples of metallic non-wetting agents include Group TI metal halides such as barium fluoride, barium chloride, barium bromide, strontium fluoride, strontium chloride, strontium bromide, calcium fluoride, calcium chloride, calcium bromide, magnesium fluoride, magnesium chloride, magnesium bromide, and combinations thereof. These compounds are thermodynamically stable, with relatively high heats of formation, and exhibit non-wetting and de-wetting behavior at temperatures exceeding 1100°C.

Other examples of metallic non-wetting agents include metallic nitrides such as boron nitride, zirconium nitride, aluminum nitride, silicon nitride, and the like; metallic carbides such as barium carbide, aluminum carbide, tungsten carbide, tungsten-nickel carbide complexes, and the like; and combinations thereof. These compounds are thermodynamically stable at high temperatures, and are non-wetting and resistant to chemical reaction with molten aluminum and alkali-based metals.

Other examples of metallic non-wetting agents include compounds and complexes of aluminum and/or silicon that combine with the Al₂O₃ and/or SiO₂ to provide reduced wetting and increased resistance to attack by molten aluminum and alkali metals and vapors. Examples include without limitation magnesium aluminate spinel (MgAl₂O₄); stack structures of alumina and zirconia such as ZrO₂•Al₂O₃, ZrO₂•Al₂O₃•ZrO₂, and Al₂O₃•ZrO₂•Al₂O₃; aluminum halides such as aluminum fluoride aluminum chloride, aluminum bromide, sodium aluminum tetrafluoride, sodium aluminum tetrachloride, sodium aluminum tetrabromide, potassium aluminum tetrafluoride, potassium aluminum tetrachloride, and potassium aluminum tetrabromide; calcium aluminate, calcium hexaluminate (CₐO•6Al₂O₃), aluminum titanate (Al₂TiO₅), calcium silicate, and combinations thereof.

Other examples of metallic non-wetting agents include Group II metal carbonates and celsians such as barium carbonate, strontium carbonate, barium celsian, strontium celsian, and combinations thereof. Also included are fluorides, chlorides and bromides of titanium, zirconium, hafnium, copper and strontium, and combinations thereof.

The Al₂O₃, SiO₂, and non-wetting agent together should constitute at least about 90% by weight, or at least about 94% by weight, or at least about 97% by weight of the dried protective coating composition. All other ingredients (including impurities, if any) should be kept to a minimum.

The dried protective coating composition may also include about 0.01% to about 2% by weight, suitably about 0.01% to about 1 % by weight of a water-soluble thickening agent. Suitable thickening agents include without limitation water-soluble synthetic or natural gums which help maintain the solid ingredients in suspension before drying. Suitable gums include without limitation xanthan gum, guar gum, alginates, locust bean gum, and combinations thereof. One suitable gum is xanthan gum sold under the name KELZAN® by CP Kelco Co. of Atlanta, Georgia.

Except for the thickening agent, the dried protective coating composition is either free or substantially free of organic ingredients. When present, the sum of all organic ingredients, inclusive of the thickening agent, is suitably not more than about 8% by weight, or not more than 5% by weight, or not more than about 2.5% by weight of the dried protective coating composition. The relative absence of organic components promotes a healthy and safe work environment. The protective coating compositions should also be free or substantially free of gelling agents, acidic compounds, alkali hydroxides and other strong bases.

The present invention also includes the aqueous protective coating composition prior to drying. The aqueous protective coating composition comprises about 5% to about 40% by weight water, suitably about 10% to about 30% by weight water, or about 15% to about 25% by weight water. Most or all of the water is combined with colloidal silica in the amounts indicated above, to form an aqueous colloidal dispersion. The aqueous colloidal dispersion is then mixed with the remaining ingredients of the protective coating composition to form an aqueous protective coating composition including about 60% to about 95% by weight solids, suitably about 70% to about 90% by weight solids, or about 75% to about 85% by weight solids. Water can be the only liquid component. The aqueous protective coating composition should be free, or substantially free, of organic liquids. The term "substantially free" indicates an organic liquid content of not more than about 8% by weight, or not more than about 5% based on the total liquid weight.

The aqueous colloidal silica dispersion and the remaining solid ingredients are mixed together to form an aqueous protective coating composition which, excluding the water, contains the same solid ingredients in the same amounts as described above for the dried protective coating composition. The aqueous protective coating composition is then applied to a ceramic or masonry surface using brushing, spraying rolling, or another suitable technique. After application, the aqueous protective coating composition is dried with or without heat to provide the dried protective coating having the composition described above.

### Example 1

An aqueous protective coating composition was prepared by mixing the following materials together in the following amounts.

| **No.** | **Ingredient** | **Weight Percent** |
|---|---|---|
| 1 | Xanthan Gum (KELZAN®) | 0.051 |
| 2 | Water | 1.698 |
| 3 | Aqueous Colloidal Silica, 40% Silica | 35.350 |
| 4 | Micronized Mullite, 58% Al₂O₃, 40% SiO₂ (MJ5M) | 37.740 |
| 5 | Calcined Alumina, 6 microns (AC2 - 325M) | 16.983 |
| 6 | Metallic Non-wetting Agent | 8.177 |
| | TOTAL | 100.00 |

Broken down by ingredients, the aqueous protective coating composition contained the following:

| **No.** | **Ingredient** | **Weight Percent** |
|---|---|---|
| 1 | Xanthan Gum (KELZAN®) | 0.051 |
| 2 | Water | 22.908 |
| 3 | Colloidal Silica | 14.140 |
| 4 | Silica from Mullite | 15.096 |
| 5 | Al₂O₃ from Mullite | 21.890 |
| 6 | Impurities from Mullite | 0.755 |
| 7 | Calcined Alumina | 16.983 |
| 8 | Metallic Non-wetting Agent | 8.177 |
| | TOTAL | 100.00 |

The aqueous protective coating composition can be provided as a two-part system, with one part containing wet ingredients and the other part containing dry ingredients. In one embodiment, the aqueous protective coating composition can be prepared by first combining and mixing the synthetic or natural gum (ingredient 1) with water (ingredient 2) to provide a first mixture. The first mixture can be combined with the aqueous colloidal silica (40% silica) in a separate container using a stirring blade for about 5 minutes, or the time needed to achieve homogeneity, to provide a second mixture. The mullite, calcined alumina and non-wetting agent can then be slowly added to the second mixture and stirred for about 10 minutes, or a time needed to achieve homogeneity. The resulting aqueous protective coating composition can settle during prolonged storage, and can be stirred again prior to use.

The aqueous protective coating composition can then be applied to a concrete or masonry surface, such as a refractory wall or lining used to contain molten aluminum in a furnace or vessel. After drying, the resulting dried protective coating has the following composition.

| **No.** | **Ingredient** | **Percent by Weight** |
|---|---|---|
| 1 | Xanthan Gum | 0.067 |
| 2 | Colloidal Silica | 18.342 |
| 3 | Silica from Mullite | 19.582 |
| 4 | Al₂O₃ from Mullite | 28.421 |
| 5 | Impurities from Mullite | 0.980 |
| 6 | Calcined Alumina | 22.031 |
| 7 | Metallic Non-wetting Agent | 10.607 |
| | TOTAL | 100.00 |

### Example 2

An aqueous protective coating composition prepared according to Example 1 was coated on one side of a 65% alumina refractory cup that had been pre-filled to 1832°F. The other side of the cup was uncoated. The cup was then filled with a 7075 molten aluminum alloy mixed with 2.5% magnesium and was maintained at a temperature of 1562°F for 120 hours. The cup was then emptied and observed. The coated side of the cup showed no visual evidence of reaction with the molten metal. The uncoated side of the cup showed substantial visual evidence of corrosion and degradation.

### Example 3

Using the low cement castable (LCC) refractory cups, one cup was fully coated with the aqueous refractory composition of Example 1 and the other cup was left uncoated. Both cups were filled with K₂CO₃, sealed, and heated to 1100°C (2012°F) for five hours in a sealed sagar. Then, the cups were emptied and inspected. The coated cup showed no visual evidence of reaction with the molten alkali metal. The uncoated cup showed substantial visual evidence of corrosion and degradation.

The embodiments of the invention described herein are exemplary. Various modifications and improvements can be made without changing the scope of the invention. The scope of the invention is indicated by the appended claims.

## Claims

1. A protective coating composition for molten aluminum and alkali metal environments, comprising on a dry weight basis:
20% or more by weight Al₂O₃;
15% to 55% by weight SiO₂; and
1% to 15% by weight of a metallic non-wetting agent;
wherein the metallic non-wetting agent is non-wetting to molten aluminum and alkali metals and vapors and resists wetting by these metals;
wherein the Al₂O₃, SiO₂, and non-wetting agent together constitute at least 90% by weight of the protective coating composition;
and some or all of the Al₂O₃ and some of the SiO₂ have the chemical formula 3Al₂O₃•2SiO₂ being provided in the form of mullite, the 3Al₂O₃•2SiO₂ constituting 30% to 70% by weight of the protective coating composition.

2. The protective coating composition of Claim 1, wherein the Al₂O₃, SiO₂, and metallic non-wetting agent together constitute at least 94% by weight of the protective coating composition.

3. The protective coating composition of Claim 1, wherein the Al₂O₃, SiO₂, and metallic non-wetting agent together constitute at least 97% by weight of the protective coating composition.

4. The protective coating composition of any preceding claim, wherein some of the SiO₂ is provided in the form of colloidal silica particles having a mean particle diameter of 1 to 100 nanometers, the colloidal silica particles constituting 5% to 30% by weight of the protective coating composition.

5. The protective coating composition of any preceding claim, wherein some of the Al₂O₃ is provided in the form of calcined alumina having a mean particle diameter of 1 to 100 microns, the calcined alumina constituting 5% to 40% by weight of the protective coating composition.

6. The protective coating composition of any preceding claim, further comprising 0.01% to 2% by weight of a synthetic or natural gum.

7. The protective coating composition of any of Claims 1 to 6, wherein the metallic non-wetting agent is selected from the group consisting of metal phosphates, zirconium silicates, Group II metal sulfates, Group II metal halides, metallic nitrides, and combinations thereof.

8. The protective coating composition of any of Claims 1 to 6, wherein the metallic non-wetting agent is selected from the group consisting of magnesium aluminate spinel, stack structures of alumina and zirconia, alumina halides, calcium aluminate, calcium hexaluminate, calcium silicate, aluminum titanate, and combinations thereof.

9. The protective coating composition of any of Claims 1 to 6, wherein the metallic non-wetting agent is selected from the group consisting of Group II metal oxides; Group II metal celsians; fluorides, chlorides and bromides of titanium, zirconium, halfnium, copper and strontium; and combinations thereof.

10. The protective coating composition of any preceding claim, wherein the metallic non-wetting agent is present at 5% to 12% by weight.

11. The protective coating composition of any preceding claim, further comprising 0.01% to 2% by weight of a synthetic or natural gum.

12. An aqueous protective coating composition, comprising 5% to 40% by weight water and 60% to 95% of the protective coating composition of any preceding claim, wherein the aqueous protective coating composition is free of organic liquids.

13. A method of providing the protective coating composition according to Claim 12, comprising the steps of:
a) combining and mixing a quantity of a water-soluble thickening agent with a quantity of water to provide a first mixture;
b) combining and mixing the first mixture with an aqueous colloidal silica dispersion to provide a second mixture; and
c) adding the Al₂O₃, SiO₂, and metallic non-wetting agent to the second mixture, and mixing the ingredients together to form the aqueous protective coating composition, whereby some or all of the Al₂SO₃ and some or all of the SiO₂ are provided in the form of mullite having the chemical formula 3Al₂O₃•2SiO₂, the 3Al₂O₃•2SiO₂ constituting 30% to 70% by weight, on a dry weight basis, of the protective coating composition.

14. The method of Claim 13, wherein the aqueous colloidal silica binder comprises 30% to 60% by weight colloidal silica particles and 40% to 70% by weight water.

15. The method of Claim 13 or 14, wherein the aqueous protective coating composition is free of organic components except for the thickening agent.

16. The method of any of Claims 13 to 15, further, comprising the steps of:
applying the aqueous coating composition to a refractory substrate;
evaporating the water from the aqueous coating composition to yield the protective coating composition; and
contacting the protective coating with molten aluminum or alkali metal vapor, wherein the protective coating composition protects the refractory substitute from chemical reaction with the molten aluminum or alkali metal vapor.

## Patentansprüche

1. Schutzbeschichtungszusammensetzung für Umgebungen mit geschmolzenem Aluminium und Alkalimetall, umfassend auf Trockengewichtsbasis:
20 Gew.-% oder mehr Al₂O₃;
15 Gew.-% bis 55 Gew.-% SiO₂; und
1 Gew.-% bis 15 Gew.-% eines metallischen Nichtbenetzungsmittels;
wobei das metallische Nichtbenetzungsmittel nichtbenetzend gegenüber geschmolzenem Aluminium und Alkalimetallen und Dämpfen ist und der Benetzung durch diese Metalle widersteht;
wobei das Al₂O₃, SiO₂ und das Nichtbenetzungsmittel zusammen mindestens 90 Gew.-% der Schutzbeschichtungszusammensetzung ausmachen;
und ein Teil oder das gesamte Al₂O₃ und ein Teil des SiO₂ die chemische Formel 3Al₂O₃•2SiO₂ aufweisen, die in Form von Mullit bereitgestellt ist, wobei das 3Al₂O₃•2SiO₂ 30 Gew.-% bis 70 Gew.-% der Schutzbeschichtungszusammensetzung ausmacht.

2. Schutzbeschichtungszusammensetzung nach Anspruch 1, wobei das Al₂O₃, SiO₂ und das metallische Nichtbenetzungsmittel zusammen mindestens 94 Gew.-% der Schutzbeschichtungszusammensetzung ausmachen.

3. Schutzbeschichtungszusammensetzung nach Anspruch 1, wobei das Al₂O₃, SiO₂ und das metallische Nichtbenetzungsmittel zusammen mindestens 97 Gew.-% der Schutzbeschichtungszusammensetzung ausmachen.

4. Schutzbeschichtungszusammensetzung nach einem der vorhergehenden Ansprüche, wobei ein Teil des SiO₂ in Form von kolloidalen Siliciumdioxidteilchen mit einem mittleren Teilchendurchmesser von 1 bis 100 Nanometer bereitgestellt ist, wobei die kolloidalen Siliciumdioxidteilchen 5 Gew.-% bis 30 Gew.-% der Schutzbeschichtungszusammensetzung ausmachen.

5. Schutzbeschichtungszusammensetzung nach einem der vorhergehenden Ansprüche, wobei ein Teil des Al₂O₃ in Form von kalziniertem Aluminiumoxid mit einem mittleren Teilchendurchmesser von 1 bis 100 Mikrometer bereitgestellt ist, wobei das kalzinierte Aluminiumoxid 5 Gew.-% bis 40 Gew.-% der Schutzbeschichtungszusammensetzung ausmacht.

6. Schutzbeschichtungszusammensetzung nach einem der vorhergehenden Ansprüche, ferner umfassend 0,01 Gew.-% bis 2 Gew.-% eines synthetischen oder natürlichen Gummis.

7. Schutzbeschichtungszusammensetzung nach einem der Ansprüche 1 bis 6, wobei das metallische Nichtbenetzungsmittel ausgewählt ist aus der Gruppe bestehend aus Metallphosphaten, Zirkoniumsilikaten, Metallsulfaten der Gruppe II, Metallhalogeniden der Gruppe II, Metallnitriden und Kombinationen davon.

8. Schutzbeschichtungszusammensetzung nach einem der Ansprüche 1 bis 6, wobei das metallische Nichtbenetzungsmittel ausgewählt ist aus der Gruppe bestehend aus Magnesiumaluminat-Spinell, Stapelstrukturen aus Aluminiumoxid und Zirkonoxid, Aluminiumoxidhalogeniden, Calciumaluminat, Calciumhexaluminat, Calciumsilicat, Aluminiumtitanat und Kombinationen davon.

9. Schutzbeschichtungszusammensetzung nach einem der Ansprüche 1 bis 6, wobei das metallische Nichtbenetzungsmittel ausgewählt ist aus der Gruppe bestehend aus Metalloxiden der Gruppe II; Metall-Celsianen der Gruppe II; Fluoriden, Chloriden und Bromiden von Titan, Zirkonium, Hafnium, Kupfer und Strontium und Kombinationen davon.

10. Schutzbeschichtungszusammensetzung nach einem der vorhergehenden Ansprüche, wobei das metallische Nichtbenetzungsmittel mit 5 Gew.-% bis 12 Gew.-% vorliegt.

11. Schutzbeschichtungszusammensetzung nach einem der vorhergehenden Ansprüche, ferner umfassend 0,01 Gew.-% bis 2 Gew.-% eines synthetischen oder natürlichen Gummis.

12. Wässrige Schutzbeschichtungszusammensetzung, umfassend 5 Gew.-% bis 40 Gew.-% Wasser und 60 Gew.-% bis 95 Gew.-% der Schutzbeschichtungszusammensetzung nach einem der vorhergehenden Ansprüche, wobei die wässrige Schutzbeschichtungszusammensetzung frei von organischen Flüssigkeiten ist.

13. Verfahren zum Bereitstellen der Schutzbeschichtungszusammensetzung nach Anspruch 12, umfassend die Schritte:
a) Kombinieren und Mischen einer Menge eines wasserlöslichen Verdickungsmittels mit einer Menge Wasser, um eine erste Mischung bereitzustellen;
b) Kombinieren und Mischen der ersten Mischung mit einer wässrigen kolloidalen Siliciumdioxiddispersion, um eine zweite Mischung bereitzustellen; und
c) Zugeben des Al₂O₃, SiO₂ und des metallischen Nichtbenetzungsmittels zu der zweiten Mischung und Mischen der Bestandteile miteinander, um die wässrige Schutzbeschichtungszusammensetzung zu bilden, wobei ein Teil oder das gesamte Al₂SO₃ und ein Teil oder das gesamte SiO₂ in Form von Mullit bereitgestellt sind mit der chemischen Formel 3Al₂O₃•2SiO₂, wobei das 3Al₂O₃•2SiO₂ 30 Gew.-% bis 70 Gew.-% der Schutzbeschichtungszusammensetzung auf Trockengewichtsbasis ausmacht.

14. Verfahren nach Anspruch 13, wobei das wässrige kolloidale Siliciumdioxidbindemittel 30 Gew.-% bis 60 Gew.-% kolloidale Siliciumdioxidteilchen und 40 Gew.-% bis 70 Gew.-% Wasser umfasst.

15. Verfahren nach Anspruch 13 oder 14, wobei die wässrige Schutzbeschichtungszusammensetzung mit Ausnahme des Verdickungsmittels frei von organischen Komponenten ist.

16. Verfahren nach einem der Ansprüche 13 bis 15, ferner umfassend die Schritte:
Aufbringen der wässrigen Beschichtungszusammensetzung auf ein feuerfestes Substrat;
Verdampfen des Wassers aus der wässrigen Beschichtungszusammensetzung, um die Schutzbeschichtungszusammensetzung zu erhalten; und
Inkontaktbringen der Schutzbeschichtung mit geschmolzenem Aluminium oder Alkalimetalldampf, wobei die Schutzbeschichtungszusammensetzung den feuerfesten Ersatz vor chemischer Reaktion mit dem geschmolzenen Aluminium oder Alkalimetalldampf schützt.

## Revendications

1. Composition de revêtement protecteur pour des environnements d'aluminium fondu et de métaux alcalins, comprenant en poids sec :
20 % ou plus en poids d'Al₂O₃ ;
15 % à 55 % en poids de SiO₂ ; et
1 % à 15 % en poids d'un agent métallique non mouillant ;
ledit agent métallique non mouillant étant non mouillant vis-à-vis de l'aluminium fondu et des métaux alcalins et des vapeurs et résistant au mouillage par ces métaux ;
lesdits Al₂O₃, SiO₂ et agent non mouillant constituant ensemble au moins 90 % en poids de la composition de revêtement protecteur ;
et une partie ou la totalité de l'Al₂O₃ et une partie du SiO₂ ayant la formule chimique 3 Al₂O₃ • 2SiO₂ se présentant sous forme de mullite, ledit 3Al₂O₃ • 2SiO₂ constituant 30 % à 70 % en poids de la composition de revêtement protecteur.

2. Composition de revêtement protecteur selon la revendication 1, lesdits Al₂O₃, SiO₂ et agent métallique non mouillant constituant ensemble au moins 94 % en poids de la composition de revêtement protecteur.

3. Composition de revêtement protecteur selon la revendication 1, lesdits Al₂O₃, SiO₂ et agent métallique non mouillant constituant ensemble au moins 97 % en poids de la composition de revêtement protecteur.

4. Composition de revêtement protecteur selon l'une quelconque des revendications précédentes, une partie du SiO₂ étant fournie sous la forme de particules de silice colloïdales ayant un diamètre moyen de particules de 1 à 100 nanomètres, les particules de silice colloïdales constituant 5 % à 30 % en poids de la composition de revêtement protecteur.

5. Composition de revêtement protecteur selon l'une quelconque des revendications précédentes, une partie de l'Al₂O₃ étant fournie sous la forme d'alumine calcinée ayant un diamètre moyen de particules de 1 à 100 microns, l'alumine calcinée constituant 5 % à 40 % en poids de la composition de revêtement protecteur.

6. Composition de revêtement protecteur selon l'une quelconque des revendications précédentes, comprenant en outre 0,01 % à 2 % en poids d'une gomme synthétique ou naturelle.

7. Composition de revêtement protecteur selon l'une quelconque des revendications 1 à 6, ledit agent métallique non mouillant étant choisi dans le groupe constitué par les phosphates métalliques, les silicates de zirconium, les sulfates de métaux du groupe II, les halogénures de métaux du groupe II, les nitrures métalliques et leurs combinaisons.

8. Composition de revêtement protecteur selon l'une quelconque des revendications 1 à 6, ledit agent métallique non mouillant étant choisi dans le groupe constitué par le spinelle d'aluminate de magnésium, les structures d'empilement d'alumine et de zircone, les halogénures d'alumine, l'aluminate de calcium, l'hexaluminate de calcium, le silicate de calcium, le titanate d'aluminium et leurs combinaisons.

9. Composition de revêtement protecteur selon l'une quelconque des revendications 1 à 6, ledit agent métallique non mouillant étant choisi dans le groupe constitué par les oxydes de métaux du groupe II ; les celsiens de métaux du groupe II ; les fluorures, chlorures et bromures de titane, zirconium, halfnium, cuivre et strontium ; et leurs combinaisons.

10. Composition de revêtement protecteur selon l'une quelconque des revendications précédentes, ledit agent métallique non mouillant étant présent à raison de 5 % à 12 % en poids.

11. Composition de revêtement protecteur selon l'une quelconque des revendications précédentes, comprenant en outre 0,01 % à 2 % en poids d'une gomme synthétique ou naturelle.

12. Composition aqueuse de revêtement protecteur, comprenant 5 % à 40 % en poids d'eau et 60 % à 95 % de la composition de revêtement protecteur selon l'une quelconque des revendications précédentes, ladite composition aqueuse de revêtement protecteur étant exempte de liquides organiques.

13. Procédé pour fournir la composition de revêtement protecteur selon la revendication 12, comprenant les étapes de :
a) combinaison et mélangeage d'une quantité d'un agent épaississant soluble dans l'eau avec une quantité d'eau pour fournir un premier mélange ;
b) combinaison et mélangeage du premier mélange avec une dispersion aqueuse de silice colloïdale pour fournir un second mélange ; et
c) ajout de l'Al₂O₃, du SiO₂ et de l'agent métallique non mouillant au second mélange, et mélangeage des ingrédients ensemble pour former la composition aqueuse de revêtement protecteur, moyennant quoi une partie ou la totalité de l'Al₂SO₃ et une partie ou la totalité du SiO₂ sont fournis sous forme de mullite ayant la formule chimique 3Al₂O₃ • 2SiO₂, ledit 3Al₂O₃ • 2SiO₂ constituant 30 % à 70 % en poids, en poids sec, de la composition de revêtement protecteur.

14. Procédé selon la revendication 13, le liant aqueux de silice colloïdale comprenant 30 % à 60 % en poids de particules de silice colloïdale et 40 % à 70 % en poids d'eau.

15. Procédé selon la revendication 13 ou 14, ladite composition aqueuse de revêtement protecteur étant exempte de composants organiques à l'exception de l'agent épaississant.

16. Procédé selon l'une quelconque des revendications 13 à 15, comprenant les étapes de :
application de la composition aqueuse de revêtement sur un substrat réfractaire ;
évaporation de l'eau de la composition aqueuse de revêtement pour produire la composition de revêtement protecteur ; et
la mise en contact du revêtement protecteur avec de l'aluminium fondu ou de la vapeur de métal alcalin, ladite composition de revêtement protecteur protégeant le substitut réfractaire d'une réaction chimique avec l'aluminium fondu ou la vapeur de métal alcalin.
